# EUROPÄISCHE PATENTSCHRIFT

(11) **EP 1 025 169 B1**
(45) Veröffentlichungstag und Bekanntmachung des Hinweises auf die Patenterteilung: **12.02.2003**
(21) Anmeldenummer: 98952731.2
(22) Anmeldetag: 21.10.1998
(51) Int. Cl.: C09D 4/00, G03F 7/027, C08G 65/00, C09D 171/02

(54) **VERWENDUNG VON (METH)ACRYLSÄUREESTERN VON DIMERDIOLALKOXYLATEN ALS BAUSTEINE FÜR STRAHLENHÄRTBARE BESCHICHTUNGEN**
USE OF DIMERDIOLALCOXYLATE (METH)ACRYLIC ACID ESTERS AS CONSTITUENTS FOR RADIATION CURED COATINGS
UTILISATION D'ESTERS D'ACIDE METHACRYLIQUE DE DIMERDIOLALCOXYLATES EN TANT QUE CONSTITUANTS POUR DES REVETEMENTS DURCISSABLES PAR RADIATION

(30) Priorität: 30.10.1997 DE 19747890
(43) Veröffentlichungstag der Anmeldung: 09.08.2000
(73) Patentinhaber: Cognis Deutschland GmbH & Co. KG, 40589 Düsseldorf (DE)
(72) Erfinder: HÖFER, Rainer, D-40477 Düsseldorf (DE); FIES, Matthias, D-47800 Krefeld (DE)
(86) Internationale Anmeldenummer: EP9806692
(87) Internationale Veröffentlichungsnummer: WO99023175

(56) Entgegenhaltungen:
- WO-A-95/17437
- US-A- 5 164 277
- US-A- 5 356 754

## Beschreibung

### Gebiet der Erfindung

Die Erfindung betrifft die Verwendung von (Meth)acrylsäureestern von Dimerdiolalkoxylaten als Bausteine für strahlenhärtbare Beschichtungen.

### Stand der Technik

Acryl- und Methacrylsäureester des 1,6-Hexandiols werden häufig als Bausteine bei der Herstellung strahlenhärtbarer Beschichtungen eingesetzt. Vorzugsweise wird dabei 1,6-Hexandioldiacrylat, fortan als HDDA abgekürzt, eingesetzt.

Beispielsweise beschreibt **US 5 271 968** wie Polycarbonat-Oberflächen mit Beschichtungs-Zusammensetzungen in Kontakt gebracht werden und der Härtungsvorgang durch Bestrahlung mit UV-Licht stattfindet. Vorzugsweise basieren dabei die Beschichtungs-Zusammensetzungen auf einem mehrfunktionellen Acrylat-Monomer, einem Photo-Initiator und HDDA.

Aus **US 5 075 348** sind Silan-freie strahlenhärtbare Zusammensetzungen auf Basis von Acrylaten bekannt. In einer bevorzugten Ausführungsform wird dabei ein spezielles Triacrylat mit HDDA gemischt.

In **WO 92/17337** werden UV-härtbare Zusammensetzungen beschrieben, die verschiedene aliphatische Urethane auf Acrylatbasis enthalten, dabei unter anderem ein multifunktionales Acrylat, das als Reaktivverdünner fungiert, wobei Trimethylolpropantriacrylat und HDDA besonders bevorzugt sind.

HDDA zeichnet sich durch eine geringe Viskosität und ein hervorragendes Lösevermögen für Epoxid-, Polyester- und Urethanacrylate aus. Während der Aushärtung kommt es bei den Formulierungen mit HDDA zu einer geringen Schrumpfung, weshalb Beschichtungen auf Metall, Glas, Kunststoffen wie PVC hervorragend gut haften. Die ausgehärteten Beschichtungen sind ganz besonders abrieb- und Chemikalien-beständig. Die Vergilbungsfreiheit und der hohe Glanz prädestinieren HDDA fiir den Einsatz in klaren Beschichtungen für Holz und Kunststoff sowie fiir Klarlacke auf Papier. All diese Eigenschaften lassen HDDA auch für pigmentierte Beschichtungen und Druckfarben vorteilhaft erscheinen.

HDDA hat einen Dampfdruck von 0,014 mbar bei 50 ° C und einen Flammpunkt von 79 ° C (DIN 51794), wodurch bei Transport, Lagerung und Verarbeitung besondere Vorkehrungen getroffen werden müssen.

Ein weiterer Nachteil von HDDA ist dessen relativ hohes Hautreizungspotential. Als Maßzahl eignet sich beispielsweise der sogenannte Draize-Index. Gemäß den Ausführungen in der Monographie **"Grundlagen und Rezepturen der Kosmetika"** (Autor: Karlheinz Schrader; Verlag: Hüthig; 2. Auflage 1989) auf **Seite 1029** handelt es sich beim Draize-Test um einen der gebräuchlichsten Tests im Hinblick auf die Quantifizierung von Hautirritationen. Dabei wird das zu testende Material für 24 Stunden auf intakte und oberflächlich skarifizierte Haut von Albino-Kaninchen appliziert. Die Ablesung erfolgt nach 24 und 72 Stunden hinsichtlich Erythem und Ödem auf einer Skala, die von 0 bis 4 und mehr reicht. Wie dem Fachmann bekannt, werden die Hautirritationswerte für 1,6-Hexandioldiacrylat (HDDA) mit Werten im Bereich von etwa 4,4 bis >6 angegeben.

Aus **EP 62 807 A1** sind Diacrylsäureester von Anlagerungsprodukten von 2 bis 6 Mol Ethylenoxid und/oder Propylenoxid an 1,6-Hexandiol, Neopentylglykol und Tripropylenglykol sowie ihre Verwendung als strahlungshärtbare Verdünnungsmittel bekannt.

### Beschreibung der Erfindung

Aufgabe der vorliegenden Erfindung war es, Substanzen bereitzustellen, die sich als Bausteine bei der Herstellung strahlenhärtbarer Beschichtungen einsetzen lassen und die gleichzeitig ein akzeptabel niedriges Hautreizungspotential aufweisen.

Diese Aufgabe wurde gelöst durch (Meth)acrylsäureester von Dimerdiolalkoxylaten, worunter Acryl- und/oder Methacrylsäureester von Anlagerungsprodukten von 1 bis 80 Mol Ethylenoxid und/oder Propylenoxid an Dimerdiole mit überwiegend 36 bis 44 C-Atomen verstanden werden.

Gegenstand der Erfindung ist daher zunächst die Verwendung von Acryl- und/oder Methacrylsäureestern von Anlagerungsprodukten von 1 bis 80 Mol Ethylenoxid und/oder Propylenoxid an Dimerdiole mit überwiegend 36 bis 44 C-Atomen als Baustein für strahlenhärtbare Beschichtungen.

Dimerdiole sind seit langem bekannte und im Handel erhältliche Verbindungen, die beispielsweise durch Reduktion von Dimerfettsäureestern gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile höherer Oligomerer, insbesondere die Trimerfettsäuren, enthalten. Dimerfettsäuren sind handelsübliche Produkte und werden in verschiedenen Zusammensetzungen und Qualitäten angeboten. Zu Dimerfettsäuren existiert eine reichhaltige Literatur. Beispielhaft seien hier folgende Artikel zitiert:
- Fette & Öle 26 (1994), Seiten 47-51
- Speciality Chemicals 1984 (Mai-Heft), Seiten 17,18, 22-24

Die den erfindungsgemäß einzusetzenden Dimerdiolalkoxylaten zu Grunde liegenden Dimerdiole sind in der Fachwelt gut bekannt. Beispielhaft sei hierzu auf einen jüngeren Artikel verwiesen, in dem unter anderem Herstellung, Struktur und Chemie der Dimerdiole behandelt werden:
- Fat Sci. Technol. 95 (1993) Nr.3, Seiten 91 - 94

Im Rahmen der vorliegenden Erfindung sind diejenigen Dimerdiolalkoxylate bevorzugt, die sich von Dimerdiolen mit einem Dimergehalt von mindestens 50% und insbesondere 75% ableiten und bei denen die Zahl der C-Atome pro Dimermolekül überwiegend im Bereich von 36 bis 44 liegt.

Die (Meth)acrylsäureester von Dimerdiolalkoxylaten können an sich nach allen dem Fachmann einschlägig bekannten Methoden hergestellt werden. Vorzugsweise erfolgt die Herstellung auf folgende Weise: In einem ersten Schritt bringt man das gewünschte Diol mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) an das eingesetzte Diol erhalten. Bei den Additionsprodukten handelt es sich mithin um EO-Addukte oder um PO-Addukte oder um EO/PO-Addukte an das jeweilige Diol; bei den EO/PO-Addukten kann dabei die Anlagerung von EO und PO statistisch oder blockweise erfolgen. Die Additionsprodukte werden dann in einem zweiten Schritt in Acryl- und/oder Methacrylsäureester überführt.

In einer Ausführungsform der vorliegenden Erfindung verwendet man solche (Meth)acrylsäureester von Dimerdiolalkoxylaten, die 2 bis 20 Mol Ethylenoxid pro Mol Dimerdiol aufweisen. Dabei sind die Diacrylate der Addukte von etwa 2 bis 20 Mol Ethylenoxid an das gewünschte Dimerdiol besonders bevorzugt.

In einer weiteren Ausführungsform der vorliegenden Erfindung verwendet man solche (Meth)acrylsäureester von Dimerdiolalkoxylaten, die 2 bis 20 Mol Propylenoxid pro Mol Dimerdiol aufweisen. Dabei sind die Diacrylate der Addukte von etwa 2 bis 20 Mol Propylenoxid an das gewünschte Dimerdiol besonders bevorzugt.

In einer bevorzugten Ausführungsform setzt man solche (Meth)acrylsäureester von Dimerdiolalkoxylaten ein, die einen Draize-Index von weniger als 2,0 und insbesondere von weniger als 1,8 aufweisen.

Im Hinblick auf den Anwendungszweck der strahlenhärtbaren Beschichtungen, die unter Verwendung der erfindungsgemäß einzusetzenden (Meth)acrylsäureester von Dimerdiolalkoxylaten hergestellt werden, unterliegt die vorliegende Erfindung keinerlei Einschränkungen.

Gegenstand der Erfindung sind schließlich Mittel zur Herstellung strahlenhärtbarer Beschichtungen enthaltend ein oder mehrere Acryl- und/oder Methacrylsäureester von Anlagerungsprodukten von 1 bis 80 Mol Ethylenoxid und/oder Propylenoxid an Dimerdiole mit überwiegend 36 bis 44 C-Atomen.

### Beispiele

Die Prüfung einer Reihe der erfindungsgemäßen (Meth)acrylsäureester von Dimerdiolalkoxylaten ergab, daß es sich bei diesen Substanzen generell um Verbindungen handelt, die effektive Reaktivverdünner für strahlenhärtbare Beschichtungen darstellen und die sich darüber hinaus durch nur geringes Hautreizungspotential (Draize-Werte < 2) auszeichnen.

## Patentansprüche

1. Verwendung von Acryl- und/oder Methacrylsäureestern von Anlagerungsprodukten von 1 bis 80 Mol Ethylenoxid und/oder Propylenoxid an Dimerdiole mit überwiegend 36 bis 44 C-Atomen als Bausteine für strahlenhärtbare Beschichtungen.

2. Verwendung nach Anspruch 1, wobei man solche Acryl- und/oder Methacrylsäureestern von Anlagerungsprodukten von 1 bis 80 Mol Ethylenoxid und/oder Propylenoxid einsetzt, die einen Draize-Index von weniger als 2,0 aufweisen.

3. Mittel zur Herstellung strahlenhärtbarer Beschichtungen enthaltend ein oder mehrere Acryl- und/oder Methacrylsäureester von Anlagerungsprodukten von 1 bis 80 Mol Ethylenoxid und/oder Propylenoxid an Dimerdiole mit überwiegend 36 bis 44 C-Atomen

## Claims

1. The use of acrylates and/or methacrylates of addition products of 1 to 80 moles ethylene oxide and/or propylene oxide onto dimerdiols predominantly containing 36 to 44 carbon atoms as structural elements for radiation-curing coatings.

2. The use claimed in claim 1, **characterized by** the use of acrylates and/or methacrylates of addition products of 1 to 80 moles ethylene oxide and/or propylene oxide which have a Draize index of less than 2.0.

3. Compositions for the production of radiation-curing coatings containing one or more acrylates and/or methacrylates of addition products of 1 to 80 moles ethylene oxide and/or propylene oxide onto dimerdiols predominantly containing 36 to 44 carbon atoms.

## Revendications

1. Utilisation d'esters d'acide acrylique et/ou d'acide méthacrylique de produits d'addition de 1 à 80 mol d'oxyde d'éthylène et/ou d'oxyde de propylène sur des diols dimères ayant principalement de 36 à 44 atomes de carbone, en tant qu'éléments constitutifs de revêtements durcissables par un rayonnement.

2. Utilisation selon la revendication 1,
dans laquelle
on met en oeuvre des esters d'acide acrylique et ou d'acide méthacrylique de produits d'addition de 1 à 80 mol d'oxyde d'éthylène et/ou d'oxyde de propylène qui possèdent un indice de Draize de moins de 2,0.

3. Agent pour la production de revêtements durcissables par un rayonnement, qui contiennent un ou plusieurs esters d'acide acrylique et/ou méthacrylique de produits d'addition de 1 à 80 mol d'oxyde d'éthylène et/ou d'oxyde de propylène sur des diols dimères ayant principalement de 36 à 44 atomes de carbone.
